(19) Europäisches Patentamt
European Patent Office
Office européen des brevets

(11) **EP 4 372 026 B1**

(12) **EUROPEAN PATENT SPECIFICATION**


(45) Date of publication and mention of the grant of the patent:
**17.06.2026 Bulletin 2026/25**

(21) Application number: **24167784.8**

(22) Date of filing: **27.03.2020**

(51) International Patent Classification (IPC):
***C08G 64/02*** (2006.01) ***C08L 69/00*** (2006.01)
***H01M 4/13*** (2010.01) ***H01M 4/62*** (2006.01)
***H01M 10/052*** (2010.01) ***H01M 10/0562*** (2010.01)
***H01B 1/06*** (2006.01) ***C08K 3/105*** (2018.01)
***C08G 64/30*** (2006.01)

(52) Cooperative Patent Classification (CPC):
**H01M 4/622; C08G 64/0208; C08G 64/0216; C08G 64/183; C08G 64/305; C08L 101/12; H01B 1/22; H01M 10/052; H01M 10/0562;**
H01M 2300/0068; Y02E 60/10


(54) **POLYMERIC BINDER AND ALL-SOLID-STATE SECONDARY BATTERY**
POLYMERBINDEMITTEL UND FESTKÖRPERSEKUNDÄRBATTERIE
LIANT POLYMÈRE ET BATTERIE SECONDAIRE ENTIÈREMENT SOLIDE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 JP 2019069158**
**31.10.2019 JP 2019199161**

(43) Date of publication of application:
**22.05.2024 Bulletin 2024/21**

(62) Document number(s) of the earlier application(s) in accordance with Art. 76 EPC:
**20784774.0 / 3 950 770**



(73) Proprietor: **Teijin Limited**
**Osaka-shi, Osaka 530-0005 (JP)**

(72) Inventors:
- **ISHII, Shuto**
**Osaka-shi, 530-0005 (JP)**
- **TOGASAKI, Junichi**
**Osaka-shi, 530-0005 (JP)**
- **YACHI, Kazuki**
**Osaka-shi, 530-0005 (JP)**
- **YAMAMOTO, Tomoyoshi**
**Osaka-shi, 530-0005 (JP)**
- **DAIDO, Takahiro**
**Osaka-shi, 530-0005 (JP)**

(74) Representative: **Carpmaels & Ransford LLP**
**One Southampton Row**
**London WC1B 5HA (GB)**



(56) References cited:
**EP-A1- 3 343 686** **JP-A- 2002 275 234**
**JP-A- 2005 044 704** **US-A1- 2012 301 699**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 4 372 026 B1

## Description

### Technical Field

The present disclosure relates to a polymeric binder and an all-solid-state secondary battery.

### Background Art

A secondary battery using a nonaqueous electrolytic solution as an electrolyte, such as a lithium ion secondary battery, has characteristics of high voltage and high energy density and therefore allows downsizing and increased capacity of the battery. By making the most of such characteristics, nonaqueous-electrolytic-solution-based secondary batteries are utilized as batteries not only for relatively small-sized equipment such as a camera, a mobile phone, and a notebook PC but also for large-sized equipment such as an electric vehicle.

However, since a nonaqueous electrolytic solution is used as an electrolyte in such a secondary battery, development of an all-solid-state secondary battery with a solid electrolyte has been actively pursued from a viewpoint of safety.

An all-solid-state secondary battery is generally constituted of electrode mixture layers (a cathode layer and an anode layer) and a solid electrolyte layer placed between the electrode mixture layers. Polyelectrolytes and inorganic solid electrolytes such as metallic oxide and metallic sulfide are known as the solid electrolytes.

When metallic oxide is utilized as the inorganic solid electrolyte, a method of acquiring an all-solid-state secondary battery by forming a solid electrolyte layer by sintering particulate metallic oxide, laminating, on both sides of the solid electrolyte layer, a cathode layer and an anode layer that are similarly acquired, and then further performing sintering is known. On the other hand, when a sulfide-based compound such as metallic sulfide is utilized as the inorganic solid electrolyte, a method of acquiring an all-solid-state secondary battery by drying a substrate after applying solvent slurry containing a particulate sulfide-based compound on the substrate, forming a solid electrolyte layer by peeling off the substrate, laminating, on both sides of the solid electrolyte layer, a cathode layer and an anode layer that are similarly acquired, and then pressurizing (pressing) the laminate is known. At this time, for the purpose of maintaining the shape of the all-solid-state secondary battery, a binder binding fine particles together is required.

For example, Patent Literature 1 discloses forming a solid electrolyte layer by using polyvinylidene fluoride (generic name: PVDF), butylene rubber, acrylonitrile butadiene rubber, or the like as a polymeric binder binding together a sulfide-based compound used in a solid electrolyte layer of an all-solid-state secondary battery.

Patent Literature 2 relates to an all-solid secondary battery additive comprising a polyalkylene carbonate, characterized in that the polyalkylene carbonate includes repeating units derived from hexanediol. Moreover, the polycarbonate can be crosslinked with trimethylolpropane.

### Citation List

### Patent Literature

Patent Literature 1: Unexamined Japanese Patent Application Publication No. 2014-137869 Patent Literature 2: JP 2005 044704 A

### Summary of Invention

### Technical Problem

It is generally known that a binder is used for suppressing a brittle fracture in an inorganic solid electrolyte layer when area and capacity of an all-solid-state secondary battery is increased. However, a conventional polymeric binder as proposed in Patent Literature 1 is an insulator from an ionic conduction viewpoint and therefore has a problem that the binder is not preferable for ionic conduction and an acquired all-solid-state secondary battery does not reach target discharge capacity. Further, when an all-solid-state secondary battery using a sulfide-based compound as a solid electrolyte layer is manufactured, a hydrophobic solvent is used in the manufacturing process, and therefore a binder dispersible in a hydrophobic solvent is required.

Accordingly, an objective of the present disclosure is to provide a polymeric binder binding an inorganic solid electrolyte together and at the same time contributing to improvement in ionic conductivity, and an all-solid-state secondary battery using the binder. Another objective of the present disclosure is to provide a polymeric binder dispersing in a hydrophobic solvent and binding together a solid electrolyte containing a sulfide-based compound, and at the same time contributing to improvement in ionic conductivity, and an all-solid-state secondary battery using the binder.

Solution to Problem

The present inventors have focused on an interface between fine particles in a solid electrolyte layer in an all-solid-state secondary battery and an interface between the solid electrolyte layer, and a cathode layer or an anode layer. The present inventors have found that existence of an ion conductive polymeric binder at the interfaces enables reduced interface resistance, enhances mobility of a metal ion, and improves performance of the all-solid-state secondary battery and have arrived at the present disclosure.

A polymeric binder according to a first aspect of the present disclosure includes an ion-conducting polymer containing a polymer and a metal ion.

The polymer is preferably a polymer selected from the group consisting of polyester, polyether, anionic polymer, polycarbonate, and silicone.

The metal ion is preferably a lithium ion.

Ionic conductance is preferably $10^{-8}$ S/cm or greater.

The polymer contained in the ion-conducting polymer is preferably three-dimensional cross-linked aliphatic polycarbonate.

The three-dimensional cross-linked aliphatic polycarbonate preferably contains a cross-linking component derived from polyol having three or more hydroxy groups.

The polymer contained in the ion-conducting polymer is preferably aliphatic polycarbonate having a structure expressed by Formula (1) below.

[Chem.1]

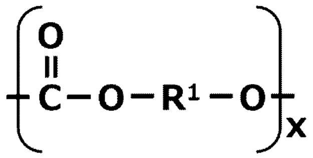

(1)

In Formula (1), $R^1$ denotes at least one type of a nonsubstituted or substituted linear, branched, or cyclic aliphatic hydrocarbon residue, and x denotes an integer equal to or greater than 3 and equal to or less than 60.

The aliphatic polycarbonate preferably further has a structure expressed by Formula (2) below.

[Chem. 2]

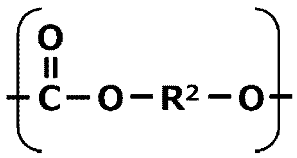

(2)

In Formula (2), $R^2$ denotes a hydrocarbon residue having a spiro-structure or a diphenylmethane structure, and the structure may contain a heteroatom.

The aliphatic polycarbonate preferably further has a structure expressed by Formula (3) below.

[Chem.3]

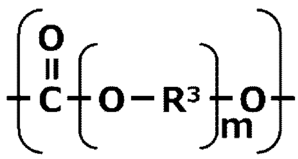

(3)

In Formula (3), $R^3$ denotes an aliphatic hydrocarbon residue having 2 to 10 carbon atoms, and m denotes an integer equal to or greater than 1 and equal to or less than 30.

An all-solid-state secondary battery according to a second aspect of the present disclosure includes an inorganic solid electrolyte,

wherein the inorganic solid electrolyte in at least an electrode mixture layer or an inorganic solid electrolyte layer is bound

together by the polymeric binder.

## Advantageous Effects of Invention

The present disclosure provides a polymeric binder binding inorganic solid electrolyte together and at the same time contributing to improvement in ionic conductivity, and an all-solid-state secondary battery using the binder. Accordingly, the polymeric binder according to the present disclosure is useful as a polymeric binder for forming an inorganic solid electrolyte layer. Further, the polymeric binder according to the present disclosure has excellent dispersibility in a hydrophobic solvent and therefore is particularly useful as a polymeric binder binding together and forming a solid electrolyte containing a sulfide-based compound and at the same time contributing to improvement in ionic conductivity.

## Brief Description of Drawings

FIG. 1 is a $^1$H-NMR spectral chart of three-dimensional cross-linked aliphatic polycarbonate used in Example 1 in the present disclosure;
FIG. 2 is a $^1$H-NMR spectral chart of non-cross-linked aliphatic polycarbonate used in Example 2 in the present disclosure;
FIG. 3 is an Arrhenius-plot-based graph of ionic conductance produced based on results of examples;
FIG. 4 is a schematic diagram illustrating a case that a three-dimensional cross-linked aliphatic polycarbonate molecule used in the present disclosure is dispersed in a hydrophobic solvent; and
FIG. 5 is a schematic diagram illustrating a case that a non-cross-linked aliphatic polycarbonate molecule used in the present disclosure is dispersed in a hydrophobic solvent.

## Description of Embodiments

A polymeric binder according to the present disclosure contains an ion-conducting polymer containing a polymer and a metal ion.

A polymeric binder herein refers to a compound or a composite for binding together an electrode mixture, an inorganic solid electrolyte, or the like, the compound or the composite containing a highly polymerized compound. Further, an ion-conducting polymer refers to a highly polymerized compound having electroconductivity with an ion as a conducting species, or a composite of the compounds. The ion-conducting polymer according to the present disclosure is a polymer containing a polymer and a metal ion, and the polymer to be used is a highly polymerized compound having a site coordinating to the metal ion.

Examples of the polymer used in the ion-conducting polymer include polyester, polyether, an anionic polymer (including polyanion), silicone, polycarbonate, and polyamide. The polymeric binder particularly preferably contains a polymer selected from the group consisting of polyester, polyether, anionic polymer, silicone, and polycarbonate, and a metal ion. Two or more types of polymers may be used in combination.

Either of aliphatic polyester and aromatic polyester may be used as polyester, and such polyester may be either cross-linked or non-cross-linked and may be either unsaturated polyester or saturated polyester. For example, a molecule of such polyester preferably contains a structure having an unshared electron pair such as a polyether chain, and more preferably has flexibility.

Either of aliphatic polyether and aromatic polyether may be used as polyether. A polymer of ethylene oxide, 1,2-propylene oxide, 1,3-propylene oxide, 1,2-butylene oxide, 1,3-butylene oxide, 2,3- butylene oxide, or 1,4-butylene oxide, or a copolymer of the above is particularly preferably used.

An anionic polymer is a polymer having an anionic functional group such as a carboxy group (-COOH) and a sulfo group ($-SO_3H$) and forms a salt by reacting with a metal ion. Examples that may be used include a polymer of an unsaturated carboxylic acid having one, or two or more double bonds. Examples of an unsaturated carboxylic acid include acrylic acid, methacrylic acid, ethacrylic acid, itaconic acid, sorbic acid, and muconic acid. While an anionic polymer is a polymer having one or more anionic functional groups, the anionic polymer may be a polyanion being a polymer having many anionic functional groups.

For example, silicone with a structure having an unshared electron pair contained in a molecule, such as polyether-modified silicone, is preferably used as silicone. Further, the silicone may be any of cross-linked, non-cross-linked, and cyclic.

Either of aliphatic polycarbonate and aromatic polycarbonate may be used as polycarbonate, and the polycarbonate may be cross-linked or non-cross-linked.

First, aliphatic polycarbonate having a structure expressed by Formula (1) below is preferably used particularly in the polymeric binder according to the present disclosure.

[Chem.4]

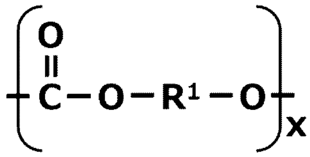 (1)

In Formula (1), $R^1$ denotes at least one type of a nonsubstituted or substituted linear, branched, or cyclic aliphatic hydrocarbon residue, and x denotes an integer equal to or greater than 3 and equal to or less than 60.

$R^1$ in Formula (1) is preferably an aliphatic hydrocarbon residue having 2 to 20 carbon atoms and is more preferably an aliphatic hydrocarbon residue having 4 to 12 carbon atoms. When the number of carbon atoms is 2 or greater, dispersibility in slurry used during production of an all-solid-state battery increases. As will be described later, the polymeric binder according to the present disclosure preferably permeates among particles of an electrode mixture or an inorganic solid electrolyte. Therefore, it is important that the polymeric binder have excellent dispersibility in a hydrophobic solvent in a manufacturing process of the all-solid-state battery. On the other hand, the number of carbon atoms is more preferably 20 or less, since ionic conductivity is improved in this case.

Further, there may be not only one type but also two or more types of the aforementioned $R^1$. Two different types of $R^1$ may lead to a preferable case of having excellent formability and ionic conductivity. Examples of such a case include $R^1$ being a combination of an aliphatic hydrocarbon residue having 4 to 6 carbon atoms and an aliphatic hydrocarbon residue having 8 to 12 carbon atoms.

Examples of an aliphatic hydrocarbon residue having 2 to 20 carbon atoms include chain aliphatic hydrocarbon groups such as an ethane-1,2-diyl group, a propane-1,3-diyl group, a butane-1,4-diyl group, a pentane-1,5-diyl group, a hexane-1,6-diyl group, a heptane-1,7-diyl group, an octane-1,8-diyl group, a nonane-1,9-diyl group, a decane-1,10-diyl group, a dodecane-1,12-diyl group, a tetradecane-1,14-diyl group, a hexadecane-1,16-diyl group, an octadecane-1,18-diyl group, and an icosane-1,20-diyl group, branched aliphatic hydrocarbon groups such as a 1-methylethane-1,2-diyl group, a 2-methylpropane-1,3-diyl group, a 2-methylbutane-1,4-diyl group, a 2-ethylbutane-1,4-diyl group, a 3-methylpentane-1,5-diyl group, a 3-methylpentane-1,5-diyl group, a 2-methylhexane-1,6-diyl group, and a 5-methyldecane-1,10-diyl group, and alicyclic hydrocarbon groups such as a cyclopropane-1,2-diyl group, a cyclobutane-1,2-diyl group, a cyclobutane-1,3-diyl group, a cyclopentane-1,2-diyl group, a cyclopentane-1,3-diyl group, a cyclohexane-1,1-diyl group, a cyclohexane-1,2-diyl group, a cyclohexane-1,3-diyl group, a cyclohexane-1,4-diyl group, a cycloheptane-1,2-diyl group, a cycloheptane-1,3-diyl group, a cycloheptane-1,4-diyl group, a cyclooctane-1,2-diyl group, a cyclooctane-1,3-diyl group, a cyclooctane-1,4-diyl group, a cyclooctane-1,5-diyl group, a cyclononane-1,2-diyl group, a cyclononane-1,3-diyl group, a cyclononane-1,4-diyl group, a cyclononane-1,5-diyl group, a cyclodecane-1,2-diyl group, a cyclodecane-1,3-diyl group, a cyclodecane-1,4-diyl group, a cyclodecane-1,5-diyl group, and a cyclodecane-1,6-diyl group.

The aliphatic hydrocarbon residue may be saturated or unsaturated, and may be substituted by an alkoxy group, a cyano group, one of primary to tertiary amino groups, a halogen atom, or the like in the main chain or a side chain.

Note that x in Formula (1) is an integer equal to or greater than 3 and equal to or less than 60, is preferably an integer equal to or greater than 10 and equal to or less than 40, and is particularly preferably an integer equal to or greater than 20 and equal to or less than 25. When x is 3 or greater, elasticity of the polymeric binder increases and mobility of a metal ion increases, and therefore ionic conductivity of the polymeric binder increases. Further, when x is 60 or less, dispersibility of the polymeric binder in a hydrophobic solvent improves. A case of the polymeric binder having a cross-linked structure in particular is more preferable since the cross-linked structure is uniform, and dispersibility in a hydrophobic solvent improves.

The aliphatic polycarbonate having a structure expressed by Formula (1) can be manufactured by a generally known method. For example, the aliphatic polycarbonate is acquired by performing transesterification between a diol compound in which a hydroxyl group is bonded to the end of an aliphatic hydrocarbon residue expressed by $R^1$ and diphenyl carbonate.

Thus, the aforementioned aliphatic polycarbonate contains a block component with x being an integer equal to or greater than 3 and equal to or less than 60 in Formula (1). The content ratio of the structure expressed by Formula (1) in the aliphatic polycarbonate is 50% by mole or greater and 100% by mole or less, is preferably 75% by mole or greater and 100% by mole or less, and is more preferably 90% by mole or greater and 100% by mole or less. In other words, the polycarbonate structure other than the repeating unit in parentheses in the structure expressed by Formula (1) may be contained at 50% by mole or less (in monomer units) of the entire aliphatic polycarbonate, preferably at 25% by mole or less, and more preferably at 10% by mole or less.

Second, aliphatic polycarbonate having structures expressed by Formula (1) and Formula (2) below is preferably used in the polymeric binder according to the present disclosure.

[Chem. 5]

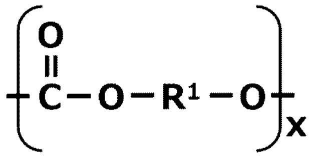 (1)

$R^1$ and x in Formula (1) are as described above.

[Chem. 6]

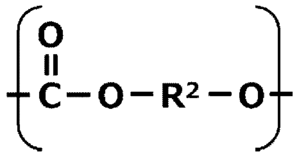 (2)

In Formula (2), $R^2$ denotes a hydrocarbon residue having a spiro-structure or a diphenylmethane structure, and the structure may contain a heteroatom.

Examples of the heteroatom include an oxygen atom, a sulfur atom, and a nitrogen atom.

The structure expressed by Formula (2) is considered to contribute to dispersibility in a hydrophobic solvent used in manufacture of the all-solid-state battery. The polymeric binder according to the present disclosure having the structure improves affinity of the polymeric binder for a hydrophobic solvent, reduces cohesion in the hydrophobic solvent, consequently improves dispersibility in the hydrophobic solvent, and therefore is preferable.

When $R^2$ in Formula (2) is a hydrocarbon residue having a spiro-structure, the content ratio of the structure expressed by Formula (1) is 30% by mole or greater and 60% by mole or less with the total of Formula (1) and Formula (2) as a basis (in monomer units) and is more preferably 35% by mole or greater and 50% by mole or less. Note that a case of $R^1$ having a structure identical to that of $R^2$ is excluded in this mode.

When $R^2$ in Formula (2) is a hydrocarbon residue having a diphenylmethane structure, the content ratio of the structure expressed by Formula (1) is 30% by mole or greater and 80% by mole or less with the total of the structures expressed by Formula (1) and Formula (2) as a basis (in monomer units) and is more preferably 35% by mole or greater and 70% by mole or less.

When a hydrocarbon residue having a spiro-structure is used, $R^2$ in Formula (2) is preferably a hydrocarbon residue having a bicyclic or higher spiro-structure having one or more spiro-atoms and is more preferably a hydrocarbon residue having a tricyclic or higher spiro-structure. The number of atoms forming a ring is preferably 4 or greater and is more preferably 6 or greater. Further, it is more preferable that part of carbon atoms forming the ring be substituted by a heteroatom such as an oxygen atom.

In a case that $R^2$ in Formula (2) is a hydrocarbon residue having a bicyclic or higher spiro-structure or a spiro-structure with a four-membered or higher ring, bulkiness increases and dispersibility in slurry used during production of the all-solid-state battery increases, and further, when part of carbon atoms forming the ring is substituted by a heteroatom, affinity for a lithium salt increases; and therefore such a case is more preferable.

Examples of a hydrocarbon residue having a bicyclic or higher spiro-structure include a spiro[2.2]pentane-1,4-diyl group, a spiro[3.3]heptane-2,6-diyl group, a spiro[4.4]nonane-2,7-diyl group, a spiro[5.5]undecane-3,9-diyl group, a spiro[3.5]nonane-2,7-diyl group, a spiro[2.6]nonane-1,6-diyl group, a spiro[4.5]decane-1,5-diyl group, a dispiro[4.2.4.2] tetradecane-1,11-diyl group, a dispiro[4.1.5.2]tetradecane-2,12-diyl group, a 1,1'-spirobi[indene]-8,8'-diyl group, and a 1H,1'H-2,2'-spirobi[naphtalene]-9,9'-diyl group.

Examples of a hydrocarbon residue having a spiro-structure in which part of atoms forming the ring is substituted by a heteroatom such as an oxygen atom include a 2,2'-(2,4,8,10-tetraoxaspiro[5.5]undecane-3,9-diyl)dipropanediyl group (generic monomer name: spiroglycol), a 2,2',3,3'-tetrahydro-1,1'-spirobi[indene]-7,7'-diyl group, a 4,8-dihydro-1H,1'H-2,4'-spirobi[quinoline]-6',7-diyl group, and a 4,4,4',4'-tetramethyl-2,2'-spirobi[chroman]-7,7'-diyl group.

A hydrocarbon residue having a spiro-structure may be saturated or unsaturated, and may be substituted by an alkoxy group, a cyano group, one of primary to tertiary amino groups, a halogen atom, or the like in the main chain or a side chain.

When a hydrocarbon residue having a diphenylmethane structure is used, $R^2$ in Formula (2) preferably has a

diphenylmethane structure in which two hydrogen atoms bonded to the central carbon is substituted by a hydrocarbon residue. Further, the hydrocarbon residue bonded to the central carbon may be saturated or unsaturated, and the central carbon may be substituted by a heteroatom such as a sulfur atom or an oxygen atom.

In a case of a diphenylmethane structure in which two hydrogen atoms bonded to the central carbon are substituted by a hydrocarbon residue, dispersibility in slurry used during production of the all-solid-state battery increases, and therefore such a case is more preferable.

Examples of a hydrocarbon residue having a diphenylmethane structure in which two hydrogen atoms bonded to the central carbon are substituted by a hydrocarbon residue include a 4,4'-(propane-2,2-diyl)diphenyl group (generic monomer name: bisphenol A), a 4,4'-(butane-2,2-diyl)diphenyl group (generic monomer name: bisphenol B), a 4,4'-(propane-2,2-diyl)bis(2-methylphenyl) group (generic monomer name: bisphenol C), a 4,4'-(ethane-1,1-diyl)bis(2-methylphenyl) group (generic monomer name: bisphenol E), a 4,4'-(propane-2,2-diyl)bis(2-isopropylphenyl) group (generic monomer name: bisphenol G), and a 4,4'-(cyclohexane-1,1-diyl)diphenyl group (generic monomer name: bisphenol Z).

Further, examples of a hydrocarbon residue having a diphenylmethane structure in which two hydrogen atoms bonded to the central carbon are substituted by an unsaturated hydrocarbon residue include a 4,4'-(1-phenylethane-1,1-diyl)diphenyl group (generic monomer name: bisphenol AP), a 4,4'-(diphenylmethylene)diphenyl group (generic monomer name: bisphenol BP), and a 2,2'-(4,4'-(9H-fluorene-9,9-diyl)bis(4,1-phenylene))bisoxydiethyl group [generic monomer name: bisphenoxyethanolfluorene (BPEF)].

Further, examples of a hydrocarbon residue having a diphenylmethane structure in which the central carbon is substituted by a heteroatom such as a sulfur atom or an oxygen atom include a 4,4'-sulfonyldiphenyl group (generic monomer name: bisphenol S) and a 4,4'-oxydiphenyl group (generic monomer name: 4,4'-dihydroxydiphenylether).

In the aforementioned second aliphatic polycarbonate having the structures expressed by Formula (1) and Formula (2), the structure expressed by Formula (1) exists in a block, and the structure expressed by Formula (2) exists in a block or randomly in the main chain.

When existing in a block, the structure expressed by Formula (2) preferably forms the block by connecting 1 to 10 units, more preferably by connecting one to five units, and particularly preferably by connecting one to three units. When the block is formed by connecting three units or less, dispersibility of the polymeric binder in a hydrophobic solvent improves.

The content ratio of the structure expressed by Formula (2) in the aforementioned aliphatic polycarbonate is preferably 10% by mole or greater and 40% by mole or less with the total of the structures expressed by Formula (1) and Formula (2) as a basis (in monomer units) and is more preferably 20% by mole or greater and 35% by mole or less.

The aliphatic polycarbonate having the structures expressed by Formula (1) and Formula (2) may be manufactured by a generally known method. For example, the aliphatic polycarbonate is acquired by performing transesterification between a diol compound in which a hydroxyl group is bonded to the end of the aliphatic hydrocarbon residue denoted by $R^1$, and diphenyl carbonate and then further performing transesterification between diol (such as bisphenol A) in which a hydroxyl group is bonded to the end of the hydrocarbon residue denoted by $R^2$, and diphenyl carbonate.

Third, aliphatic polycarbonate having structures expressed by Formula (1), Formula (2), and Formula (3) below is preferably used in the polymeric binder according to the present disclosure.

[Chem. 7]

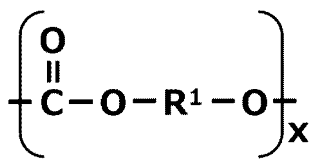 (1)

$R^1$ and x in Formula (1) are as described above.

[Chem. 8]

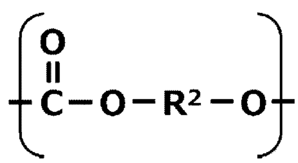 (2)

$R^2$ in Formula (2) is as described above.

[Chem. 9]

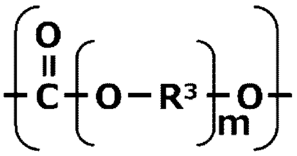 (3)

In Formula (3), $R^3$ denotes an aliphatic hydrocarbon residue having 2 to 10 carbon atoms, and m denotes an integer equal to or greater than 1 and equal to or less than 30.

The structure expressed by Formula (3) is considered to contribute to adhesiveness of the polymeric binder to binding target materials in the all-solid-state battery being cathode/anode active materials, a solid electrolyte, and a current collector. The polymeric binder according to the present disclosure having the structure increases flexibility and polarity of the polymeric binder, consequently improves adhesiveness to the binding target materials, and therefore is preferable.

$R^3$ in Formula (3) is preferably an alkylene group having 2 to 10 carbon atoms and is more preferably an alkylene group having two to four carbon atoms. The number of carbon atoms being 2 or greater improves flexibility of the polymer and therefore is more preferable.

Note that m in Formula (3) is preferably an integer equal to or greater than 1 and equal to or less than 20, is more preferably an integer equal to or greater than 2 and equal to or less than 10, and is particularly preferably an integer equal to or greater than 3 and equal to or less than 5. The value of m being 1 or greater increases flexibility of the polymer, and the value being 5 or less improves adhesiveness to metal; and therefore such a case is more preferable.

Examples of the aliphatic hydrocarbon residue having 2 to 10 carbon atoms include chain aliphatic hydrocarbon groups such as an ethane-1,2-diyl group, a propane-1,3-diyl group, a butane-1,4-diyl group, a pentane-1,5-diyl group, a hexane-1,6-diyl group, a heptane-1,7-diyl group, an octane-1,8-diyl group, a nonane-1,9-diyl group, and a decane-1,10-diyl group, and branched aliphatic hydrocarbon groups such as a 1-methylethane-1,2-diyl group, a 2-methylpropane-1,3-diyl group, a 2-methylbutane-1,4-diyl group, a 2-ethylbutane-1,4-diyl group, a 3-methylpentane-1,5-diyl group, a 3-methylpentane-1,5-diyl group, and a 2-methylhexane-1,6-diyl group.

The aliphatic hydrocarbon residue may be saturated or unsaturated, and may be substituted by an alkoxy group, a cyano group, one of primary to tertiary amino groups, halogen atom, or the like in the main chain or a side chain.

The content ratio of the structure expressed by Formula (3) in the aliphatic polycarbonate is 5% by mole or greater and 40% by mole or less with the total of the structures expressed by Formula (1), Formula (2), and Formula (3) as a basis (in monomer units) and is more preferably 10% by mole or greater and 35% by mole or less. Note that a case that $R^1$ has a structure identical to that of $R^2$ is excluded in this mode. Further, a case that $R^1$ and $R^2$ have structures identical to that of $R^3$ is excluded when m is equal to 1.

In the aforementioned third aliphatic polycarbonate having the structures expressed by Formula (1), Formula (2), and Formula (3), the structure expressed by Formula (1) exists in a block, and each of the structures expressed by Formula (2) and Formula (3) exists in a block or randomly in the main chain.

When the structure expressed by Formula (2) exists in a block, the structure expressed by Formula (2) preferably forms a block by connecting 1 to 10 units, more preferably by connecting one to five units, and particularly preferably connecting one to three units. When the block is formed by connecting three units or less, dispersibility of the polymeric binder in a hydrophobic solvent improves.

Further, when the structure expressed by Formula (3) exists in a block, the structure expressed by Formula (3) preferably forms the block by connecting 1 to 10 units, more preferably connecting one to five units, and particularly preferably by connecting one to three units. When the block is formed by connecting three units or less, dispersibility and a binding property of the polymeric binder in and to a hydrophobic solvent coexist; and therefore such a case is preferable.

The aliphatic polycarbonate having the structures expressed by Formula (1), Formula (2), and Formula (3) can be manufactured by a generally known method. For example, the aliphatic polycarbonate is acquired by performing transesterification between a diol compound in which a hydroxyl group is bonded to the end of the aliphatic hydrocarbon residue expressed by $R^1$, and diphenyl carbonate and then further performing transesterification between a diol compound in which a hydroxyl group is bonded to the end of a hydrocarbon residue expressed by $R^2$ along with a diol compound (such as diethylene glycol, triethylene glycol, or polyethylene glycol) having a structure expressed by the inner parentheses in Formula (3), and diphenyl carbonate.

The weight-average molecular weight (Mw) of the aliphatic polycarbonate is preferably 5000 or greater and 200000 or less.

Further, the aliphatic polycarbonate may contain another copolymerization component as long as the objective of the present disclosure is achieved. Examples of another copolymerization component include a polyether component, a polyester component, and a polyamide component.

Each of the first, second and third aliphatic polycarbonates includes a structural unit expressed by Formula (1) in at least the main chain but may further be three-dimensional cross-linked aliphatic polycarbonate. A three-dimensional cross-linked **type** provides a high binding property when turned into a polymeric binder; and therefore fine particles in an inorganic solid electrolyte are firmly bound together, and a thin and firm inorganic solid electrolyte layer is acquired.

When three-dimensional cross-linked polycarbonate is acquired by cross-linking polycarbonate, the three-dimensional cross-linked polycarbonate can be manufactured by a generally known method. Examples of the method include a method of causing the aliphatic polycarbonate having the structure in Formula (1) [and a diol compound in which a hydroxyl group is bonded to the end of the hydrocarbon residue expressed by $R^2$ in Formula (2) and a diol compound having the structure expressed by the inner parentheses in Formula (3), as needed] to react with a cross-linker and forming a carbonate bond, and a method of previously adding a cross-linker into a system and causing the cross-linker to react during a polymerization reaction of aliphatic polycarbonate.

In the aforementioned manufacture of the aliphatic polycarbonate compound, examples of a material to be used for carbonation of diol include diphenyl carbonate and phosgene.

The cross-linker forming a cross-linking component is not limited as long as the cross-linker carbonates or directly reacts with a hydroxy group at the end of the aliphatic polycarbonate; and while, for example, a compound containing a hydroxy group, a glycidyl group, an isocyanate group, a carboxy group, or an amino group is used, a method of carbonating polyol having three to four hydroxy groups in particular is preferably used.

Examples of polyol to be used include glycerin, trimethylolpropane, and pentaerythritol. One type of polyol may be used, or two or more types may be used together. Pentaerythritol is most preferably used in the present disclosure from viewpoints of process stability and reactivity.

The ratio of a cross-linker used in manufacture of the three-dimensional cross-linked polycarbonate to a aliphatic polycarbonate compound being set to 0.01 to 10 moles of the cross-linker for 1 mole of the aliphatic polycarbonate compound provides cross-link density enhancing mobility of a metal ion, a lithium ion in particular, and providing excellent ionic conduction. Furthermore, the amount of the cross-linker is preferably 0.05 to 5 moles and is more preferably 0.1 to 1 mole.

Further, the polymeric binder containing the aforementioned aliphatic polycarbonate may be used together with another polymeric binder as long as the objective of the present disclosure can be achieved; however, when the polymeric binder is used together with another polymeric binder, the other polymeric binder is used at a ratio of 50% by mass or less, preferably 30% by mass or less, and more preferably 10% by mass or less, from a viewpoint of exerting a characteristic of the polymeric binder containing the aforementioned aliphatic polycarbonate.

The polymeric binder according to the present disclosure contains an ion-conducting polymer containing a polymer and a metal ion.

The ratio of the metal ion in the ion-conducting polymer is used at 5% by mass or greater with the total amount of the polymer and a metallic salt giving the metal ion as a basis, preferably 15% by mass or greater, and more preferably 30% by mass or greater, from an ionic conductivity viewpoint. While not being particularly limited, the upper limit is about 80% by mass.

When a polymer selected from polyester, polyether, silicone, and polycarbonate is used, the polymeric binder is acquired by adding metal or a compound giving the metal ion, such as the metallic salt, to the polymer.

Examples of the metallic salt include lithium salts such as $LiN(SO_2F)_2$ (generic name: LiFSI), $LiN(SO_2CF_3)_2$ (generic name: LiTFSI), $LiN(SO_2C_2H_5)_2$, $LiPF_6$, and $LiBF_4$.

An ion-conducting polymer containing a polymer selected from the group consisting of polyester, polyether, silicone, and polycarbonate, and a metal ion can be manufactured by forming a solid solution of the metallic salt and the polymer. For example, the polymeric binder according to the present disclosure is acquired by mixing and dispersing a polymer and a metallic salt into a polar solvent such as acetonitrile or THF and then volatilizing the solvent by drying the dispersion.

When an ion-conducting polymer containing an anionic polymer and a metal ion is manufactured, a polymeric binder is acquired by, for example, causing the anionic polymer to react with hydroxide or oxide of the metal.

In the polymeric binder according to the present disclosure, the metal ion is preferably a lithium ion from a viewpoint of acquiring a secondary battery with a high electromotive force and high discharge capacity.

The ionic conductance of the polymeric binder according to the present disclosure at 30 to 50°C is preferably $10^{-8}$ S/cm or greater from a viewpoint of a need for causing the all-solid-state secondary battery to generate a sufficient electromotive force. The ionic conductance is more preferably $10^{-6}$ S/cm or greater.

The ionic conductance in the present disclosure refers to a value calculated from a resistance value acquired by mixing the polymeric binder according to the present disclosure with lithium bis(fluorosulfonyl)imide (hereinafter referred to as "LiFSI") weighed in such a way that the content ratio in the polymeric binder is a predetermined ratio, dissolving the mix in acetonitrile or THF, and then producing a 2032 type button battery type cell by sandwiching an electrolyte membrane cast on a copper foil by two stainless steel sheets and measuring the cell by using an impedance analyzer manufactured by Solartron in a measurement frequency range from 1 to 100 kHz, at an amplitude voltage 10 mV, and in a measurement

temperature range from 0 to 60°C.

The ionic conductance of the polymeric binder according to the present disclosure is considered to improve as a micro-Brownian motion of the main chain of a polymer increases, and therefore a more active micro-Brownian motion in an actually used temperature region is preferable. Accordingly, a lower glass transition temperature is preferable, and the temperature at -20°C or less is particularly preferable.

The polymeric binder according to the present disclosure is used for binding together a cathode mixture, an anode mixture, and a solid electrolyte in the all-solid-state secondary battery. In other words, the polymeric binder according to the present disclosure desirably permeates among the cathode mixture, the anode mixture, and the solid electrolyte during the manufacturing process. Since slurry using a hydrophobic solvent such as chloroform or anisole is used in the manufacturing process by preference, the polymeric binder according to the present disclosure desirably disperses in the hydrophobic solvent.

Examples of the hydrophobic solvent include aliphatic hydrocarbon such as pentane, hexane, heptane, octane, nonane, and decane, aromatic hydrocarbon such as benzene, toluene, and xylene, halogen-substituted hydrocarbon such as chloroform, dichloromethane, and carbon tetrachloride, halogen-substituted aromatic hydrocarbon such a chlorobenzene and bromobenzene, and aromatic ether such as anisole; and chloroform or anisole in particular is preferably used.

Accordingly, the dispersion ratio of the polymeric binder according to the present disclosure in chloroform or anisole is preferably 70% or greater and is more preferably 80% or greater.

Note that the dispersion ratio is calculated by Equation (a) below.

$$\text{dispersion ratio (\%)} = (\text{residual amount}/\text{theoretical amount}) \times 100 \ldots \text{(a)}$$

The "theoretical amount" in the above equation refers to, assuming that the total amount of a sample polymeric binder disperses in chloroform or anisole, the mass (g) of the polymeric binder calculated from the concentration (% by mass) of the polymeric binder in the fluid dispersion and the mass (g) of the collected fluid dispersion.

Further, the "residual amount" refers to the mass (g) of the actually residual sample polymeric binder when the collected fluid dispersion is dried and the chloroform or the anisole is removed.

An inorganic solid electrolyte is bound together through the polymeric binder according to the present disclosure in the all-solid-state secondary battery according to the present disclosure. The inorganic solid electrolyte is a solid compound used in each of electrode mixture layers and/or an inorganic solid electrolyte layer.

The inorganic solid electrolyte layer according to the present disclosure is formed between a cathode mixture layer and an anode mixture layer and is preferably formed by pressure-molding an inorganic solid electrolyte material. Then, the inorganic solid electrolyte layer contains at least an inorganic solid electrolyte and the polymeric binder according to the present disclosure.

For example, the thickness of the inorganic solid electrolyte layer according to the present disclosure is preferably 100 μm or less and is more preferably 30 μm or less since an excessive thickness degrades an output characteristic and an energy characteristic.

An inorganic solid electrolyte material similar to that used in a common all-solid-state secondary battery may be used as the inorganic solid electrolyte material, examples of which include a sulfide solid electrolyte material and an oxide solid electrolyte material. A sulfide solid electrolyte material is particularly preferable as the inorganic solid electrolyte material in that an all-solid-state secondary battery with an excellent output characteristic can be provided. Examples of the inorganic solid electrolyte material include solid sulfide electrolyte materials such as $Li_2S$-$P_2S_5$, $Li_2S$-$SiS_2$, $Li_2S$-$GeS_2$, $Li_{10}GeP_2Si_2$ (generic name: LGPS), and $Li_{10}SnP_2S_{12}$, and solid oxide materials such as $Li_7La_3Zr_2O_{12}$ (generic name: LLZO), and $Li_{1.3}Al_{0.3}Ti_{1.7}(PO_4)_3$ (generic name: LATP).

While the inorganic solid electrolyte layer according to the present disclosure contains the polymeric binder according to the present disclosure, the inorganic solid electrolyte layer may contain 20% by mass or less or preferably 10% by mass or less of a generally known binder such as fluoride such as polytetrafluoroethylene (PTFE), butylene rubber, or acrylonitrile butadiene rubber.

The inorganic solid electrolyte layer according to the present disclosure may contain 0.01 to 10 parts by mass of the polymeric binder according to the present disclosure for 100 parts by mass of the inorganic solid electrolyte material.

The cathode mixture layer according to the present disclosure is a layer containing at least a cathode active material and may further contain at least one of an inorganic solid electrolyte material, a conductive assistant, and a binder as needed.

While not being particularly limited, examples of the cathode active material in the cathode mixture layer include rock salt layer type active materials such as $LiCoO_2$, $LiMnO_2$, $LiNiO_2$, $LiVO_2$, and $LiNi_{1/3}Co_{1/3}Mn_{1/3}O_2$, spinel type active materials such as $LiMn_2O_4$, $Li(Ni_{0.5}Mn_{1.5})O_4$, and an olivine type active materials such as $LiFePO_4$ and $LiMnPO_4$. The

compound may be partially element-substituent.

Examples of the inorganic solid electrolyte material in the cathode mixture layer include solid sulfides such as $Li_2S$-$P_2S_5$, $Li_2S$-$SiS_2$, $Li_2S$-$GeS_2$, $Li_{10}GeP_2S_{12}$ (LGPS), and $Li_{10}SnP_2S_{12}$, and solid oxide materials such as $Li_7La_3Zr_2O_{12}$ (generic name: LLZO) and $Li_{1.3}Al_{0.3}$ $Ti_{1.7}(PO_4)_3$ (generic name: LATP). The compounds may be partially element-substituent.

Examples of the conductive assistant in the cathode mixture layer include carbon black such as acetylene black and ketjen black, a carbon nanotube (generic name: CNT), and a carbon nanofiber [VGCF (registered trademark)] being a vapor grown carbon fiber.

While the polymeric binder according to the present disclosure may be used as the binder in the cathode mixture layer, the binder may be, for example, a generally known binder such as a fluoride such as polytetrafluoroethylene (generic name: PTFE), butylene rubber, or acrylonitrile butadiene rubber. The generally known binder may be used together with the polymeric binder according to the present disclosure.

For example, the thickness of the cathode mixture layer is preferably within a range from 0.1 μm to 1000 μm.

The anode mixture layer according to the present disclosure is a layer containing at least an anode active material and may further contain at least one of a solid electrolyte material, a conductive assistant, and a binder as needed.

Examples of the anode material used in the anode mixture layer as the anode active material include carbon materials such as natural graphite and spherical graphite, silicon materials such as amorphous, lithium titanium oxides such as $Li_4Ti_5O_{12}$, and metal lithium.

The inorganic solid electrolyte material, the conductive assistant, and the binder in the anode mixture layer are similar to those in the aforementioned cathode mixture layer.

For example, the thickness of the anode mixture layer is preferably within a range from 0.1 μm to 1000 μm.

As described above, the polymeric binder according to the present disclosure is used as a binder in the electrode mixture layers and/or the inorganic solid electrolyte layer.

Use of a lithium salt as a metallic salt in the polymeric binder along with use of a lithium compound as the inorganic solid electrolyte in particular can provide a lithium ion all-solid-state secondary battery.

Further, slurry acquired by dispersing the polymeric binder into a hydrophobic solvent is used in a manufacturing process of an all-solid-state battery including a sulfide-based solid electrolyte, in order to prevent degradation in battery performance due to generation of hydrogen sulfide or the like. At that time, three-dimensional cross-linked polycarbonate containing the cross-linker at the aforementioned usage amount provides excellent dispersibility in a hydrophobic solvent in a state of forming a solid solution with a metal ion compound and provides excellent handleability and productivity.

An example of a method of manufacturing the all-solid-state secondary battery according to the present disclosure will be described.

First, slurry for forming a cathode mixture layer is prepared by combining the cathode material, the conductive assistant (such as carbon black), and the binder that are described above at a predetermined combination ratio and then mixing and kneading the combination with a predetermined amount of solvent.

Similarly, slurry for an anode mixture layer is prepared from the aforementioned anode material.

The cathode material slurry is applied to a substrate constituted of a current collector such as aluminum, undergoes drying or the like, and then is turned into an electrode active material layer.

The anode material slurry is applied to a substrate constituted of a current collector such as copper (or nickel), undergoes drying or the like, and then is turned into an electrode active material layer.

Next, slurry is prepared by mixing and kneading an inorganic solid electrolyte material and the polymeric binder according to the present disclosure with a solvent at a predetermined ratio.

The prepared slurry is applied to a surface of the cathode (or anode) electrode active material layer and undergoes drying or the like; and a cathode (or an anode) on which an inorganic solid electrolyte layer is formed is formed.

Subsequently, a cathode/inorganic solid electrolyte/anode laminated body is manufactured by laminating the cathode and the anode each formed with an inorganic solid electrolyte layer in such a way as to face each other.

The all-solid-state secondary battery according to the present disclosure is acquired by pressure molding (pressing) the manufactured laminated body, then attaching a tab to each of the cathode collector and the anode current collector, and housing the laminated body in a battery exterior material.

## Examples

While the present disclosure will be specifically described below by citing Examples and Comparative Examples, the scope of the present disclosure is not limited by Examples and Comparative Examples.

### Weight-Average Molecular Weight and Molecular Weight Distribution

Each of a weight-average molecular weight (Mw) and a molecular weight distribution (Mw/Mn) were found from

values of a weight-average molecular weight (Mw) and a number-average molecular weight (Mn) in terms of standard polystyrene, the values being measured by gel permeation chromatography (GPC). The molecular weight distribution is a value expressed by a ratio of the weight-average molecular weight to the number-average molecular weight.

The GPC measurement was performed by using a differential refractometer WATERS 410 manufactured by Waters Corporation as a detector, a MODEL 510 high performance liquid chromatography as a pump, and two pieces of Shodex GPC HF IP-806L connected in series as a column. The measurement condition was a flow speed of 1.0 mL/min, use of chloroform as a solvent, and injection of 0.1 mL of a solution at a sample concentration of 0.2 mg/mL.

Glass Transition Temperature

A glass transition temperature was measured by a differential scanning type calorimeter (Q20) manufactured by TA Instruments with 10 mg of a sample in an atmosphere of nitrogen, raising the temperature from -100°C to 200°C at a speed of 20°C/min.

Polymer Structure

With regard to a polymer structure, $^1$H-NMR in a deuterated chloroform solution was measured by using a nuclear magnetic resonance device JNM-ECA600 spectrometer manufactured by JEOL Ltd., and the structure was confirmed.

Manufacture Example 1

Synthesis of three-dimensional cross-linked aliphatic polycarbonate was performed in accordance with the following operation.

1. Preparation of Aliphatic Polycarbonate

55.2 g (612.5 mmol) of 1,4-butanediol, 15.3 g (87.5 mmol) of 1,10-decanediol, 150.0 g (700 mmol) of diphenyl carbonate (manufactured by Aldrich), and 0.59 mg (7 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed.

Next, the temperature was raised at 0.5°C/min while the pressure was reduced at 1 kPa/min, and stirring was performed for two hours. Subsequently, stirring was performed for five minutes at 260°C at reduced pressure, and a polymerization reaction was carried out. After completion of the reaction, the three-necked flask was cooled, and aliphatic polycarbonate E was acquired. The weight-average molecular weight of the acquired aliphatic polycarbonate E was $3.0 \times 10^3$ (Mw/Mn = 2.0). The structure of the acquired aliphatic polycarbonate E was confirmed by $^1$H-NMR.

2. Cross-linking Reaction

150 g (50 mmol) of the acquired aliphatic polycarbonate E, 0.73 g (5 mmol) of pentaerythritol (manufactured by Wako Pure Chemical Industries, Ltd.), 11.5 g (53 mmol) of diphenyl carbonate, and 0.04 mg (0.5 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours.

Next, stirring was performed for five minutes at 260°C at reduced pressure, and polymerization reaction was carried out. After completion of the reaction, the three-necked flask was cooled. The weight-average molecular weight of acquired three-dimensional cross-linked aliphatic polycarbonate E1 was $7.2 \times 10^4$ (Mw/Mn = 4.4). The structure of the acquired three-dimensional cross-linked aliphatic polycarbonate E1 was confirmed by $^1$H-NMR (FIG. 1).

Manufacture Example 2

Non-cross-linked aliphatic polycarbonate E2 was acquired by performing an operation similar to that in Manufacture Example 1 except that pentaerythritol was not used. The weight-average molecular weight of the acquired non-cross-linked aliphatic polycarbonate E2 was $7.1 \times 10^4$ (Mw/Mn = 1.9). The structure of the acquired non-cross-linked aliphatic polycarbonate E2 was confirmed by $^1$H-NMR (FIG. 2).

Manufacture Example 3

Aliphatic polycarbonate E was acquired by performing preparation of aliphatic polycarbonate similarly to Manufacture Example 1, and a copolymerization reaction was subsequently carried out as follows.

30 g (10 mmol) of the acquired aliphatic polycarbonate E, 0.35 g (3 mmol) of pentaerythritol (manufactured by Wako Pure Chemical Industries, Ltd.), 46.2 g (152 mmol) of spiroglycol, 22.8 g (152 mmol) of triethylene glycol, 68.5 g (320 mmol) of diphenyl carbonate, and 0.27 mg (3 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours.

Next, stirring was performed for five minutes at 260°C at reduced pressure, and a polymerization reaction was carried out. After completion of the reaction, the three-necked flask was cooled. The weight-average molecular weight of acquired three-dimensional cross-linked aliphatic polycarbonate E3 was $1.7 \times 10^5$ (Mw/Mn = 3.4). The structure of the acquired three-dimensional cross-linked aliphatic polycarbonate E3 was confirmed by $^1$H-NMR.

Manufacture Example 4

Aliphatic polycarbonate E was acquired by performing preparation of aliphatic polycarbonate similarly to Manufacture Example 1, and a copolymerization reaction was subsequently carried out as follows.

75 g (25 mmol) of the acquired aliphatic polycarbonate E, 0.49 g (4 mmol) of pentaerythritol (manufactured by Wako Pure Chemical Industries, Ltd.), 49.3 g (216 mmol) of bisphenol A, 53.5 g (250 mmol) of diphenyl carbonate, and 0.21 mg (2 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours.

Next, stirring was performed for five minutes at 260°C at reduced pressure, and a polymerization reaction was carried out. After completion of the reaction, the three-necked flask was cooled. The weight-average molecular weight of acquired three-dimensional cross-linked aliphatic polycarbonate E4 was $4.2 \times 10^4$ (Mw/Mn = 2.4). The structure of the acquired three-dimensional cross-linked aliphatic polycarbonate E4 was confirmed by $^1$H-NMR.

Manufacture Example 5

Three-dimensional cross-linked aliphatic polycarbonate E5 was acquired by performing an operation similar to that in Manufacture Example 4 except for using 4,4'-dihydroxydiphenylether in place of bisphenol A. The weight-average molecular weight of the acquired three-dimensional cross-linked aliphatic polycarbonate E5 was $4.2 \times 10^4$ (Mw/Mn = 3.2). The structure of the acquired three-dimensional cross-linked aliphatic polycarbonate E5 was confirmed by $^1$H-NMR.

Manufacture Example 6

Aliphatic polycarbonate E was acquired by performing preparation of aliphatic polycarbonate similarly to Manufacture Example 1, and a copolymerization reaction was subsequently carried out as follows.

30 g (10 mmol) of the acquired copolymerization aliphatic polycarbonate E, 0.28 g (2 mmol) of pentaerythritol (manufactured by Wako Pure Chemical Industries, Ltd.), 36.9 g (121 mmol) of spiroglycol, 12.1 g (81 mmol) of triethylene glycol, 44.1 g (206 mmol) of diphenyl carbonate, and 0.17 mg (2 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours.

Next, stirring was performed for five minutes at 260°C at reduced pressure, and a polymerization reaction was carried out. After completion of the reaction, the three-necked flask was cooled. The weight-average molecular weight of acquired three-dimensional cross-linked copolymerization aliphatic polycarbonate E6 was $4.7 \times 10^4$ (Mw/Mn = 2.1). The structure of the acquired three-dimensional cross-linked copolymerization aliphatic polycarbonate E6 was confirmed by $^1$H-NMR.

Example 1

By using the three-dimensional cross-linked aliphatic polycarbonate E1 acquired in Manufacture Example 1, an electrolyte membrane E1 constituted of a polymeric binder was manufactured by the following method.

A fluid dispersion E1 containing the polymeric binder at a concentration of 30% by mass was acquired by mixing

the three-dimensional cross-linked aliphatic polycarbonate E1 with LiFSI weighed in such a way that the content ratio in the polymeric binder is 32% by mass and sufficiently stirring the mix in acetonitrile.

Next, 1 mL of the fluid dispersion E1 of the polymeric binder was uniformly applied on one side of a copper thin film with sides of 5 cm by using a micropipetter. A transparent electrolyte membrane E1 constituted of a polymeric binder and having a LiFSI content ratio of 32% by mass and a thickness of 0.065 mm was acquired by performing drying for three hours at 60°C and then further performing drying for three hours at 60°C at reduced pressure (Table 1).

Example 2

A fluid dispersion E2 of a polymeric binder containing 32% by mass of LiFSI was prepared by a procedure similar to that in Example 1 except for use of the non-cross-linked aliphatic polycarbonate E2 acquired in Manufacture Example 2 in place of the three-dimensional cross-linked aliphatic polycarbonate E1; and by using the acquired fluid dispersion E2 of the polymeric binder, a transparent electrolyte membrane E2 having a thickness of 0.051 mm was acquired (Table 1).

Example 3

A fluid dispersion E3-1 having a polymeric binder concentration of 30% by mass was acquired by mixing the three-dimensional cross-linked aliphatic polycarbonate E3 acquired in Manufacture Example 3 with LiFSI weighed in such a way that the content ratio in the polymeric binder is 32% by mass and sufficiently stirring the mix in THF.

Next, 1 mL of the polymeric binder fluid dispersion E3-1 was uniformly applied on one side of a copper thin film with sides of 5 cm by using a micropipetter. A transparent electrolyte membrane E3-1 constituted of a polymeric binder and having a LiFSI content ratio of 32% by mass and a thickness of 0.131 mm was acquired by performing drying for three hours at 60°C and then further performing drying for four hours at 55°C at reduced pressure (Example 3-1, Table 1).

A fluid dispersion E3-2 of a polymeric binder having a LiFSI content ratio of 50% by mass was prepared by a similar procedure; and a transparent electrolyte membrane E3-2 being constituted of a polymeric binder and having a thickness of 0.261 mm was acquired (Example 3-2, Table 1).

Example 4

A fluid dispersion E4 of a polymeric binder containing 32% by mass of LiFSI was prepared by a procedure similar to that in Example 3 except for use of the three-dimensional cross-linked aliphatic polycarbonate E4 acquired in Manufacture Example 4; and by using the acquired fluid dispersion E4, a transparent electrolyte membrane E4 having a thickness of 0.049 mm was acquired (Table 1).

Example 5

A fluid dispersion E5 of a polymeric binder containing 32% by mass of LiFSI was prepared by a procedure similar to that in Example 3 except for use of the three-dimensional cross-linked aliphatic polycarbonate E5 acquired in Manufacture Example 5; and by using the acquired fluid dispersion E5, a transparent electrolyte membrane E5 having a thickness of 0.053 mm was acquired (Table 1).

Example 6

A fluid dispersion E6-1 having a polymeric binder concentration of 30% by mass was acquired by mixing the three-dimensional cross-linked aliphatic polycarbonate E6 acquired in Manufacture Example 6 with LiFSI weighed in such a way that the content ratio in the polymeric binder was 32% by mass and sufficiently stirring the mix in THF.

Next, 1 mL of the polymeric binder fluid dispersion E6-1 was uniformly applied on one side of a copper thin film with sides of 5 cm by using a micropipetter. A transparent electrolyte membrane E6-1 constituted of a polymeric binder and having a LiFSI content ratio of 32% by mass and a thickness of 0.237 mm was acquired by performing drying for three hours at 60°C and then further performing drying for four hours at 55°C at reduced pressure (Example 6-1, Table 1).

A fluid dispersion E6-2 of a polymeric binder having a LiFSI content ratio of 50% by mass was prepared by a similar procedure; and a transparent electrolyte membrane E6-2 constituted of a polymeric binder and having a thickness of 0.146 mm was acquired (Example 6-2, Table 1).

Comparative Examples 1 to 6

White electrolyte membranes (R1, R2, R3, R4, R5, and R6) being constituted of a polymeric binder, containing 0% by mass of LiFSI, and having respective thicknesses of 0.058 mm (Comparative Example 1), 0.053 mm (Comparative

Example 2), 0.166 mm (Comparative Example 3), 0.199 mm (Comparative Example 4), 0.176 mm (Comparative Example 5), and 0.125 mm (Comparative Example 6) were acquired by procedures similar to those in Examples 1 to 6 except for not using LiFSI (Table 1).

Performance evaluation of the polymeric binder was performed in accordance with the following method.

Glass Transition Temperature Evaluation

It is confirmed that the glass transition temperature of the polymeric binder in Example 2 is about the same as that of the polymeric binder in Comparative Example 2 and that a sufficiently low value is maintained after addition of LiFSI, as illustrated in Table 1. Further, it is confirmed that the glass transition temperature of the polymeric binder in Example 1 is about the same as that of the polymeric binder in Example 2 and that the polymeric binder has a property desirable as a polymeric binder after introduction of the three-dimensional cross-linked structure. Further, it is confirmed that the glass transition temperatures of the polymeric binders in Examples 3 to 6 are lower than that of the polymeric binder in Example 2 after addition of LiFSI actually used as a binder and that the polymeric binders have a property desirable as a polymeric binder after copolymerization of spiroglycol, triethylene glycol, bisphenol A, and diphenyl ether.

Binding Property Evaluation

Two types of binding property evaluation of a polymeric binder to an inorganic solid electrolyte and a current collecting foil were performed as follows: (i) a binding property to an aluminum foil and (ii) a binding property to a sulfide-based solid electrolyte.

(i) Binding Property to Aluminum Foil

Evaluation was performed based on a binding property to an aluminum foil being a common evaluation method in a binder for a lithium ion secondary battery.
Specifically, the evaluation was performed by the following method.

Binding Property Evaluation of Examples 1 and 2

2.5 mL of each of the 30% by mass acetonitrile fluid dispersions acquired in Examples 1 and 2 and Comparative Examples 1 and 2 was uniformly applied on a region 150 mm long and 60 mm wide on an aluminum foil.

Next, drying was performed for one hour at 100°C, and then drying was further performed for two hours at 60°C at reduced pressure. Another aluminum foil was overlaid on the acquired sheet sample, and pressing was performed for two minutes under a condition of 60°C and 0.5 MPa. A sample for peeling testing was produced by cutting out the pressed aluminum sheet into a piece 200 mm long and 25 mm wide in such a way that the polymeric binder was contained. The sample for peeling testing was set on AG-100B manufactured by Shimadzu Corporation with a chuck space of 20 mm, and peel force (N) was measured at a speed of 10 mm/min. The average value of peel force between 60 and 100 mm in a 200 mm measurement range was calculated and was determined to be the binding property of the polymeric binder (Table 1).

Binding Property Evaluation of Examples 3 to 6

2.5 mL of each of the 15% by mass THF fluid dispersions acquired in Examples 3 to 5 and Comparative Examples 3 to 5 was uniformly applied on a region 150 mm long and 60 mm wide on an aluminum foil.

Next, drying was performed for one hour at 60°C, and then drying was further performed for four hours at 55°C at reduced pressure. Another aluminum foil was overlaid on the acquired sheet sample, and pressing was performed for two minutes under a condition of 60°C and 0.5 MPa. A sample for peeling testing was produced by cutting out the pressed aluminum sheet into a piece 200 mm long and 25 mm wide in such a way that the polymeric binder was contained. The sample for peeling testing was set on AG-100B manufactured by Shimadzu Corporation with a chuck space of 20 mm, and peel force (N) was measured at a speed of 10 mm/min. An average value of peel force between 60 and 100 mm in a 200 mm measure range was calculated and was determined to be the binding property of the polymeric binder (Table 1).

It is found with respect to the polymeric binders in Examples 1 and 3 that peel force increases and a binding property improves as an amount of contained lithium salt increases, as illustrated in Table 1. Further, from comparison of peel force between the polymeric binder using the three-dimensional cross-linked polycarbonate in Example 1 and the polymeric binder using the non-cross-linked aliphatic polycarbonate in Example 2, it is confirmed that the polymeric binder using the three-dimensional cross-linked aliphatic polycarbonate in Example 1 has a higher peel force and a higher binding property. Furthermore, from comparison of peel force between the three-dimensional cross-linked aliphatic polycarbonate in Example 6 and the non-cross-linked aliphatic polycarbonate in Example 2, it is confirmed that Example 6 has a higher

peel force and that copolymerization of spiroglycol (generic name: SPG) and triethylene glycol (generic name: TEG) improves a binding property.

(ii) Binding Property to Sulfide-based Solid Electrolyte

Binding property evaluation of a polymeric binder to a sulfide-based solid electrolyte was performed as follows.
A polymeric binder B6 was produced by drying the polymeric binder fluid dispersion (LiFSI = 50% by mass) produced in Example 6 for five hours at 60°C and then further drying the fluid dispersion for three hours at 55°C at reduced pressure.
Next, a fluid dispersion D6 was produced by adding anisole in such a way that the concentration of the polymeric binder B6 was 10% by mass.
As a sulfide-based solid electrolyte, the fluid dispersion D6 was added to powdery LPS ($75Li_2S$-$25P_2S_5$) in such a way that the concentration of the polymeric binder B6 was 6% by mass. Subsequently, mixing and stirring were performed with a mortar, and solid electrolyte slurry was produced. A solid electrolyte membrane containing the polymeric binder was acquired by drying the solid electrolyte slurry and pressing the acquired powder at 300 MPa.
A solid electrolyte membrane not containing the polymeric binder was produced by a procedure similar to the above except that the polymeric binder was not used.
A tensile test was performed on each of test pieces (10 mm wide and 30 mm long) cut out from the two types of acquired solid electrolyte membranes, respectively, by using a digital force gauge (FGP-10 manufactured by Shimpo Corporation); and breaking strength was measured.
The breaking strength of the solid electrolyte membrane containing the polymeric binder was 1.5 MPa. On the other hand, the breaking strength of the solid electrolyte membrane not containing the binder was 0.85 MPa.
From the above, it is confirmed that the polymeric binder according to the present disclosure firmly binds the sulfide-based solid electrolyte together.

Ionic Conductance Measurement

Ionic conductance was acquired by the following method.
A 2032 button battery type cell was produced by cutting out each of the electrolyte membranes constituted of the polymeric binders acquired in Examples 1 to 6 and Comparative Examples 1 to 6 into a circle with a diameter of 16 mm and sandwiching the circle by two stainless steel sheets (φ15.5 mm). Impedance at each of 0, 10, 20, 30, 40, 50, and 60°C was measured in a measurement frequency range from 1 to 100 kHz at an amplitude voltage of 10 mV by using an impedance analyzer manufactured by Solartron. Ionic conductance was calculated from the acquired impedance by using Equation (b) below.

$$\sigma = L/(R \times S) \ldots (b)$$

In Equation (b) above, $\sigma$ denotes ionic conductance (S/cm), R denotes impedance ($\Omega$), S denotes the cross-sectional area ($cm^2$) of the stainless steel sheet, and L denotes the thickness (cm) of an electrolyte membrane.
Table 1 lists the measurement results. Further, by using the ionic conductance ($\sigma$) calculated from the aforementioned measurement results, an Arrhenius plot was produced with the vertical axis indicating the common logarithm [$\log(\sigma)$] of the ionic conductance and the horizontal axis indicating the reciprocal of the measured temperature (1000/T) (FIG. 3).
It is confirmed that the electrolyte membranes constituted of the polymeric binders in Examples 1 to 6 exhibit higher ionic conductance relative to the electrolyte membranes constituted of the polymeric binders in Comparative Examples 1 to 6, as indicated in Table 1 and FIG. 3.

Hydrophobic Solvent Dispersibility of Polymeric Binder

Each of the polymeric binder fluid dispersions produced in Examples 1 and 2, and Comparative Examples 1 and 2 was dispensed into a 30 mL vial, underwent drying for six hours at 100°C, and then further underwent drying for three hours at 60°C at reduced pressure. Further, each of the polymeric binder fluid dispersions produced in Examples 3 to 6 and Comparative Examples 3 to 6 was dispensed into a 30 mL vial, underwent drying for five hours at 60°C, and then further underwent drying for four hours at 50°C at reduced pressure.
Next, chloroform being a hydrophobic solvent was put into a 30 mL vial in such a way that the concentration of the polymeric binder was 10% by mass and underwent stirring for three hours at 25°C. After stopping of stirring, 1 g of the mixed solution was dispensed into another weighed 30 mL vial, underwent drying for one hour at 100°C, and further

underwent drying for one hour at 60°C at reduced pressure.

After drying, the 30 mL vial was weighed, and the mass of the residual was calculated. The dispersion ratio of the solution was calculated from the calculated residual amount by using Equation (c) below (Table 1).

$$\text{dispersion ratio} = \text{residual amount}/\text{theoretical residual amount} \times 100 \ldots \text{(c)}$$

Chloroform was replaced by anisole as a hydrophobic solvent, and evaluation of dispersibility was similarly performed (Table 1). In this case, drying was performed for one hour at 160°C, and then drying was further performed for one hour at 60°C at reduced pressure instead of performing drying for one hour at 100°C and further performing drying for one hour at 60°C at reduced pressure.

It is found that the three-dimensional cross-linked polymeric binders in Examples 1 and 3 to 6 exhibit high dispersibility in chloroform after adding 32% by mass lithium relative to the non-cross-linked polymeric binder in Example 2, as illustrated in Table 1. It is found that Examples 3 and 6 in particular exhibit dispersibility in chloroform after adding 50% by mass lithium being a high added amount.

Furthermore, it is found that the polymeric binders in Examples 1 and 3 to 6 exhibit high dispersibility in anisole after adding 32% by mass lithium relative to the polymeric binder in Example 2. It is found that Examples 3 and 6 in particular exhibit dispersibility in anisole after adding 50% by mass lithium being a high added amount.

From the above, it is confirmed that the polymeric binders in Examples 1 and 3 to 6 have high dispersibility in a hydrophobic solvent.

Table 1

| | Aliphatic polycarbonate | | | | | | | Polymeric binder | | | | | | |
|---|---|---|---|---|---|---|---|---|---|---|---|---|---|---|
| | Main chain | Cross-linking component | Dispersion component | | | Adhesive Component | Molecular weight (Mw) | Added amount of LiFSI | Tg | Peel force | Thickness | Ionic conductance (σ) (30°C) | Dispersion ratio in hydrophobic solvent | |
| | 1,4-butanediol:1,10-decanediol = 7:1 | Pentaerythritol | Spiroglycol | Bisphenol A | 4,4'-dihydroxy diphenylether | Triethylene glycol | | | | | | | Chloroform | Anisole |
| | mol% | mol% | mol% | mol% | mol% | mol% | | mass% | °C | N | mm | S/cm | % | % |
| Comparative Example 1 | 99.5 | 0.5 | 0 | 0 | 0 | 0 | $7.2 \times 10^4$ | 0 | -39 | 0.07 | 0.058 | Unmeasurable due to high resistance | 100 | 100 |
| Example 1 | | | | | | | | 32 | -38 | 0.94 | 0.065 | $3.22 \times 10^{-6}$ | 74 | 0 |
| Comparative Example 2 | 100 | 0 | 0 | 0 | 0 | 0 | $7.1 \times 10^4$ | 0 | -44 | 0.01 | 0.053 | Unmeasurable due to high resistance | 100 | 100 |
| Example 2 | | | | | | | | 32 | -45 | 0.06 | 0.051 | $6.75 \times 10^{-7}$ | 70 | 0 |
| Comparative Example 3 | 39.5 | 0.5 | 30 | 0 | 0 | 30 | $1.7 \times 10^5$ | 0 | -34 | 0.00 | 0.166 | Unmeasurable due to high resistance | 100 | 100 |
| Example 3-1 | | | | | | | | 32 | -38 | 2.39 | 0.131 | $4.90 \times 10^{-8}$ | 81 | 87 |
| Example 3-2 | | | | | | | | 50 | -59 | 2.78 | 0.261 | $5.66 \times 10^{-6}$ | 69 | 89 |
| Comparative Example 4 | 69.5 | 0.5 | 0 | 30 | 0 | 0 | $4.2 \times 10^4$ | 0 | -3 | 1.08 | 0.199 | Unmeasurable due to high resistance | 100 | 100 |
| Example 4 | | | | | | | | 32 | -66 | 0.26 | 0.049 | $4.34 \times 10^{-8}$ | 93 | 100 |
| Comparative Example 5 | 69.5 | 0.5 | 0 | 0 | 30 | 0 | $4.2 \times 10^4$ | 0 | -25 | 0.09 | 0.176 | Unmeasurable due to high resistance | 100 | 100 |
| Example 5 | | | | | | | | 32 | -65 | 0.06 | 0.053 | $8.61 \times 10^{-8}$ | 74 | 91 |
| Comparative Example 6 | 49.5 | 0.5 | 30 | 0 | 0 | 20 | $4.7 \times 10^4$ | 0 | -35 | 000 | 0.125 | Unmeasurable due to high resistance | 100 | 97 |
| Example 6-1 | | | | | | | | 32 | -75 | 5.64 | 0.237 | $2.02 \times 10^{-8}$ | 100 | 83 |
| Example 6-2 | | | | | | | | 50 | -81 | 1.38 | 0.146 | $2.18 \times 10^{-5}$ | 90 | 80 |

While the mechanism of the polymeric binder according to the present disclosure, and in particular aliphatic polycarbonate, having a three-dimensional cross-linked structure, a spiro-structure, or a diphenylmethane structure improving dispersibility of the polymeric binder in a hydrophobic solvent is not completely clear, a mechanism as described below is conjectured.

Specifically, the three-dimensional cross-linked aliphatic polycarbonate forms a structure like a micelle the surface of which is hydrophobic, by the three-dimensional cross-linked structure in the aliphatic polycarbonate containing a hydrophilic metal ion, as illustrated in FIG. 4. Therefore, the metal ion does not come in contact with a hydrophobic solvent, and the polymeric binder easily disperses in the hydrophobic solvent.

On the other hand, as illustrated in FIG. 5, in a case of a non-cross-linked aliphatic polycarbonate, a metal ion is exposed on the surface of the polymeric binder and may come in contact with a hydrophobic solvent; and therefore affinity of the polymeric binder for a hydrophobic solvent declines, and dispersibility declines.

This application claims the benefit of Japanese Patent Application No. 2019-069158, filed on March 29, 2019, and Japanese Patent Application No. 2019-199161, filed on October 31, 2019.

Industrial Applicability

The polymeric binder according to the present disclosure can provide an all-solid-state secondary battery binding an electrode mixture or an inorganic solid electrolyte together and, at the same time, contributing to improvement in ionic conductivity and having a high electromotive force and high discharge capacity. Accordingly, the present disclosure can be used as a battery for not only small-sized equipment such as a mobile phone, a smartphone, and a camera but also for large-sized equipment such as an electric vehicle and is of outstanding utility value from an industrial viewpoint.

## Claims

1. A three-dimensional cross-linked aliphatic polycarbonate having structures expressed by Formula (1), Formula (2), and Formula (3), below:

[Chem. 1]

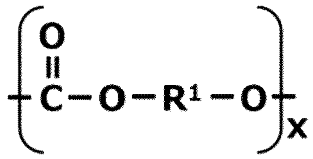 (1)

where $R^1$ denotes at least one type of a nonsubstituted or substituted linear, branched, or cyclic aliphatic hydrocarbon residue having 2 to 20 carbon atoms, and x denotes an integer equal to or greater than 3 and equal to or less than 60,

[Chem. 2]

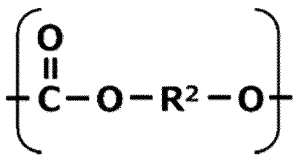 (2)

where $R^2$ denotes a hydrocarbon residue having a spiro-structure or a diphenylmethane structure, and the structure may contain a heteroatom,

[Chem. 3]

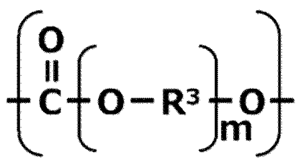 (3)

where $R^3$ denotes an aliphatic hydrocarbon residue having 2 to 10 carbon atoms, and m denotes an integer equal to or greater than 1 and equal to or less than 30; and

a cross-linking component derived from one type of polyol or two or more types of polyol selected from the group consisting of glycerin, trimethylolpropane, and pentaerythritol.

**2.** The three-dimensional cross-linked aliphatic polycarbonate according to claim 1, wherein

a ratio of the cross-linking component to 1 mol of the structure expressed by Formula (1) is 0.01 to 10 moles,

when $R^2$ in Formula (2) is a hydrocarbon residue having a spiro-structure, a content ratio of the structure expressed by Formula (1) is 30% by mole or greater and 60% by mole or less with a total of the structures expressed by Formula (1) and Formula (2) as a basis (in monomer units) and $R^1$ has a structure different from that of $R^2$, and

when $R^2$ in Formula (2) is a hydrocarbon residue having a diphenylmethane structure, a content ratio of the structure expressed by Formula (1) is 30% by mole or greater and 80% by mole or less with the total of the structures expressed by Formula (1) and Formula (2) as a basis (in monomer units), and

a content of the structure expressed by Formula (3) is 5% by mole or greater and 40% by mole or less with a total of the structures expressed by Formula (1), Formula (2), and Formula (3) as a basis (in monomer units), and when m is equal to 1, $R^1$ and $R^2$ have structures different from that of $R^3$.

**3.** The three-dimensional cross-linked aliphatic polycarbonate according to claims 1 or 2, wherein the weight-average molecular weight (Mw) is 5,000 or greater and 200,000 or less, determined as indicated in the specification.

**4.** The three-dimensional cross-linked aliphatic polycarbonate according to any one of claims 1 to 3, wherein a ratio of the cross-linking component to 1 mol of the aliphatic polycarbonate compound is 0.01 to 10 moles.

**5.** A polymeric binder including an ion-conducting polymer containing a polymer and a metal ion, wherein the polymer contained in the ion-conducting polymer is the three-dimensional cross-linked aliphatic polycarbonate according to any one of claims 1 to 4.

## Patentansprüche

**1.** Dreidimensionales vernetztes aliphatisches Polycarbonat mit durch die nachstehende Formel (1), Formel (2) und Formel (3) dargestellten Strukturen:

[Chem. 1]

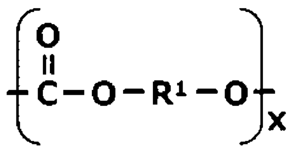

(1)

wobei $R^1$ wenigstens einen Typ eines unsubstituierten oder substituierten, linearen, verzweigten oder cyclischen aliphatischen Kohlenwasserstoffrests mit 2 bis 20 Kohlenstoffatomen bezeichnet und x eine ganze Zahl gleich oder größer als 3 und gleich oder kleiner als 60 bezeichnet,

[Chem. 2]

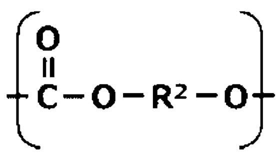

(2)

wobei $R^2$ einen Kohlenwasserstoffrest mit einer Spirostruktur oder einer Diphenylmethanstruktur bezeichnet und die Struktur ein Heteroatom enthalten kann,

[Chem. 3]

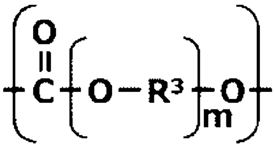 (3)

wobei $R^3$ einen aliphatischen Kohlenwasserstoffrest mit 2 bis 10 Kohlenstoffatomen bezeichnet und m eine ganze Zahl gleich oder größer als 1 und gleich oder kleiner als 30 bezeichnet; und
einer Vernetzungskomponente abgeleitet von einem Typ von Polyol oder zwei oder mehr Typen von Polyol ausgewählt aus der Gruppe bestehend aus Glycerin, Trimethylolpropan und Pentaerythrit.

**2.** Dreidimensionales vernetztes aliphatisches Polycarbonat nach Anspruch 1, wobei

ein Verhältnis der Vernetzungskomponente zu 1 mol der durch Formel (1) dargestellten Struktur 0,01 bis 10 mol beträgt,
wenn $R^2$ in Formel (2) ein Kohlenwasserstoffrest mit einer Spirostruktur ist, ein Gehaltsanteil der durch Formel (1) dargestellten Struktur 30 Mol-% oder mehr und 60 Mol-% oder weniger bezogen auf eine Summe der durch Formel (1) und Formel (2) dargestellten Strukturen (in Monomereinheiten) beträgt und $R^1$ eine Struktur aufweist, die von jener von $R^2$ verschieden ist, und
wenn $R^2$ in Formel (2) ein Kohlenwasserstoffrest mit einer Diphenylmethanstruktur ist, ein Gehaltsanteil der durch Formel (1) dargestellten Struktur 30 Mol-% oder mehr und 80 Mol-% oder weniger bezogen auf eine Summe der durch Formel (1) und Formel (2) dargestellten Strukturen (in Monomereinheiten) beträgt, und
ein Gehalt der durch Formel (3) dargestellten Struktur 5 Mol-% oder mehr und 40 Mol-% oder weniger bezogen auf eine Summe der durch Formel (1), Formel (2) und Formel (3) dargestellten Strukturen (in Monomereinheiten) beträgt, und wenn m gleich 1 ist, $R^1$ und $R^2$ Strukturen aufweisen, die von jener von $R^3$ verschieden sind.

**3.** Dreidimensionales vernetztes aliphatisches Polycarbonat nach Anspruch 1 oder 2, wobei das gewichtsmittlere Molekulargewicht (Mw) 5.000 oder mehr und 200.000 oder weniger beträgt, bestimmt wie in der Beschreibung beschrieben.

**4.** Dreidimensionales vernetztes aliphatisches Polycarbonat nach einem der Ansprüche 1 bis 3, wobei ein Verhältnis der Vernetzungskomponente zu 1 mol der aliphatischen Polycarbonatverbindung 0,01 bis 10 mol beträgt.

**5.** Polymeres Bindemittel umfassend ein ionenleitendes Polymer, das ein Polymer und ein Metallion enthält, wobei das in dem ionenleitenden Polymer enthaltene Polymer das dreidimensionale vernetzte aliphatische Polycarbonat nach einem der Ansprüche 1 bis 4 ist.

## Revendications

**1.** Polycarbonate aliphatique réticulé tridimensionnel possédant des structures exprimées par la formule (1), la formule (2) et la formule (3), ci-dessous :

[Chem. 1]

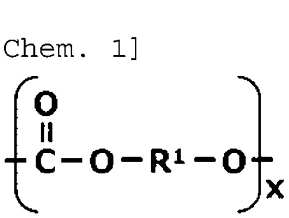 (1)

dans laquelle $R^1$ désigne au moins un type de radical hydrocarboné aliphatique linéaire, ramifié ou cyclique, substitué ou non substitué ayant 2 à 20 atomes de carbone, et x désigne un entier supérieur ou égal à 3 et inférieur ou égal à 60,

[Chem. 2]

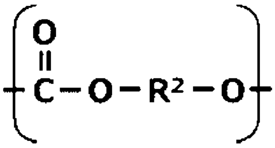 (2)

dans laquelle $R^2$ désigne un radical hydrocarboné possédant une structure spiro ou une structure diphénylméthane, et la structure peut contenir un hétéroatome,

[Chem. 3]

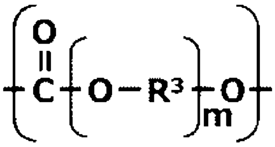 (3)

dans laquelle $R^3$ désigne un radical hydrocarboné aliphatique ayant 2 à 10 atomes de carbone, et m désigne un entier supérieur ou égal à 1 et inférieur ou égal à 30 ; et

un composant réticulant dérivé d'un type de polyol ou de deux ou plusieurs types de polyol choisis dans le groupe constitué par la glycérine, le triméthylolpropane et le pentaérythritol.

**2.** Polycarbonate aliphatique réticulé tridimensionnel selon la revendication 1, dans lequel

un rapport du composant réticulant sur 1 mole de la structure exprimée par la formule (1) est de 0,01 à 10 moles, lorsque $R^2$ dans la formule (2) est un radical hydrocarboné ayant une structure spiro, un rapport de teneurs de la structure exprimée par la formule (1) est de 30 % en moles ou plus et de 60 % en moles ou moins avec un total des structures exprimées par la formule (1) et la formule (2) comme une base (en unités monomères) et $R^1$ a une structure différente de celle de $R^2$, et

lorsque $R^2$ dans la formule (2) est un radical hydrocarboné ayant une structure diphénylméthane, un rapport de teneurs de la structure exprimée par la formule (1) est de 30 % en moles ou plus et de 80 % en moles ou moins avec le total des structures exprimées par la formule (1) et la formule (2) comme une base (en unités monomères), et

une teneur de la structure exprimée par la formule (3) est de 5 % en moles ou plus et de 40 % en moles ou moins avec un total des structures exprimées par la formule (1), la formule (2) et la formule (3) comme une base (en unités monomères), et lorsque m est égal à 1, $R^1$ et $R^2$ ont des structures différentes de celle de $R^3$.

**3.** Polycarbonate aliphatique réticulé tridimensionnel selon la revendication 1 ou 2, dans lequel le poids moléculaire moyen en poids (Mw) est de 5 000 ou plus et de 200 000 ou moins, déterminé comme indiqué dans la description.

**4.** Polycarbonate aliphatique réticulé tridimensionnel selon l'une quelconque des revendications 1 à 3, dans lequel un rapport du composant réticulant sur 1 mole du composé polycarbonate aliphatique est de 0,01 à 10 moles.

**5.** Liant polymérique comprenant un polymère conducteur d'ions contenant un polymère et un ion métallique, dans lequel le polymère contenu dans le polymère conducteur d'ions est le polycarbonate aliphatique réticulé tridimensionnel selon l'une quelconque des revendications 1 à 4.

FIG. 1

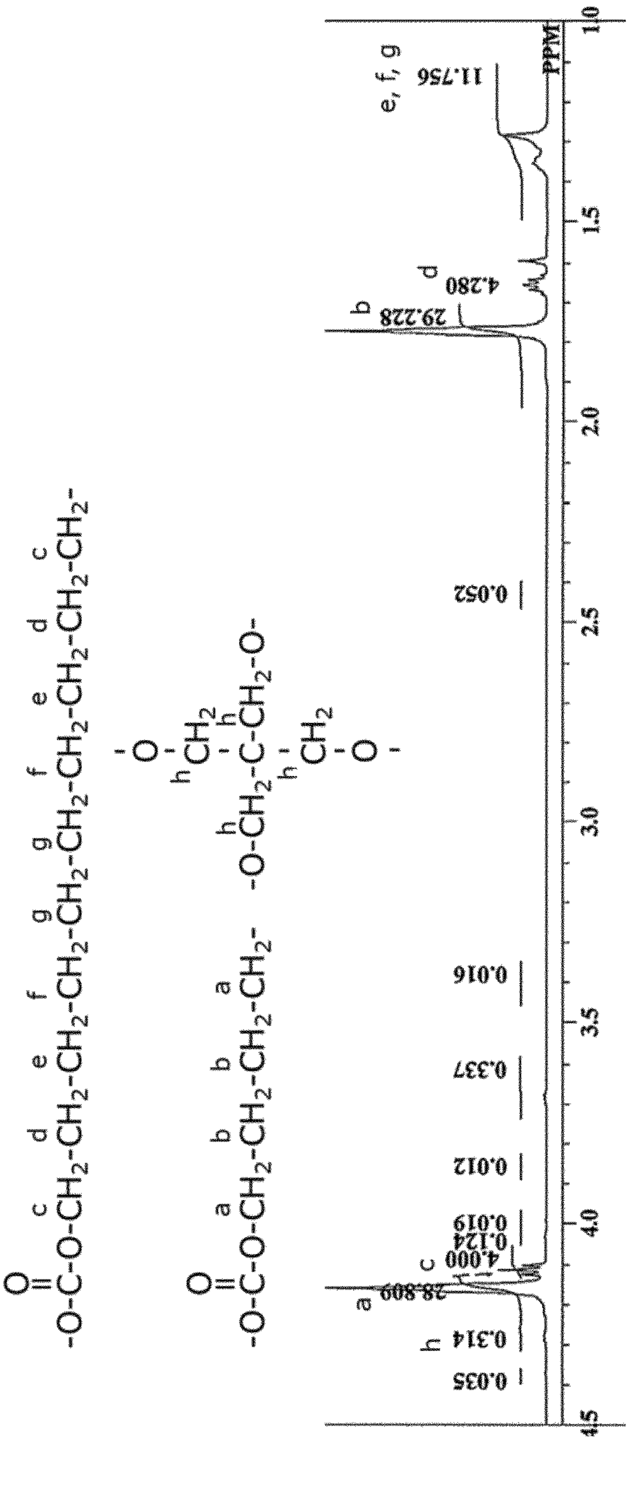
PPM
1.0
1.5
2.0
2.5
3.0
3.5
4.0
4.5
e, f, g 11.756
d 4.280
b 29.228
0.052
0.016
0.337
0.012
0.019
0.124
c 4.000
a 28.809
h 0.314
0.035

FIG. 2

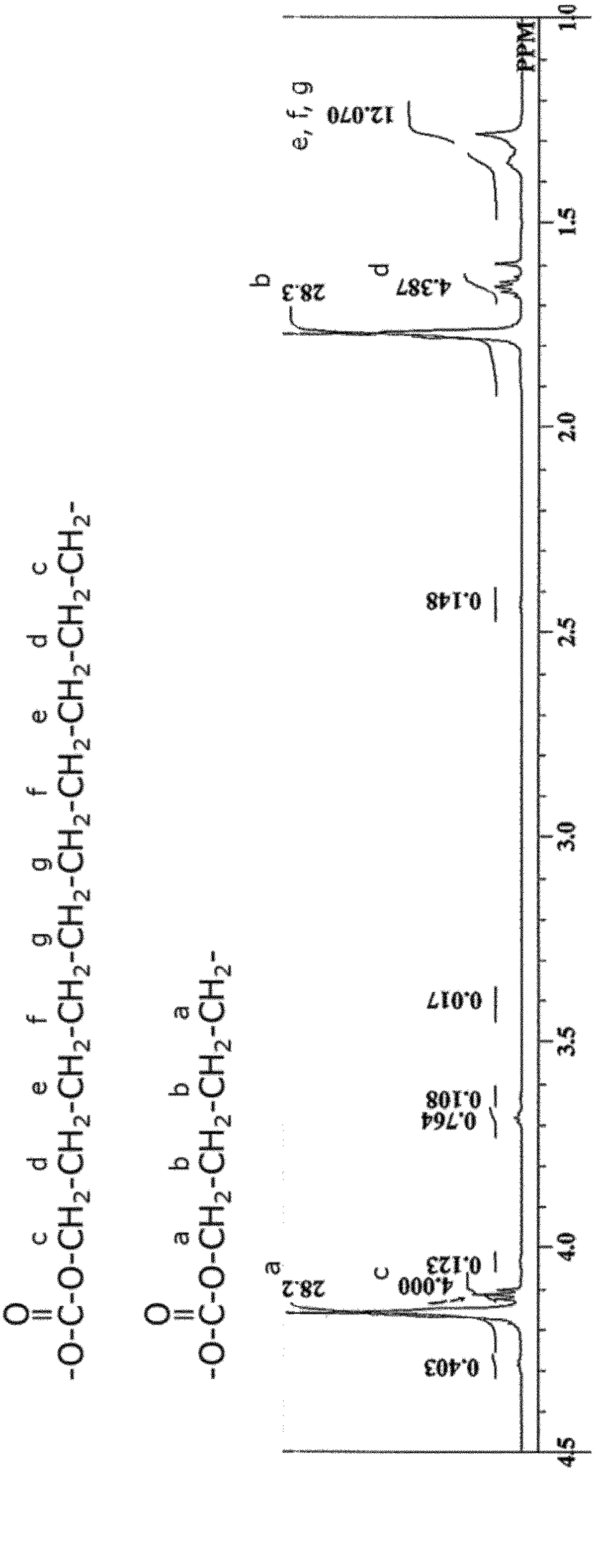
PPM
1.0
1.5
2.0
2.5
3.0
3.5
4.0
4.5
e, f, g
12.070
b
28.3
d
4.387
0.148
0.017
0.108
0.764
a
28.2
c
4.000
0.123
0.403

FIG. 3

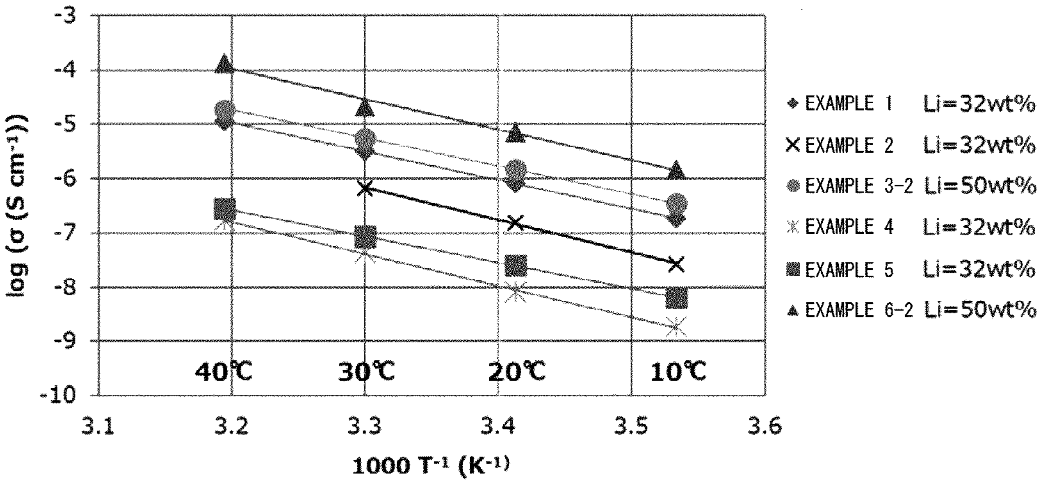
-3
-4
-5
-6
-7
-8
-9
-10
log (σ (S cm⁻¹))
40℃
30℃
20℃
10℃
3.1
3.2
3.3
3.4
3.5
3.6
1000 T⁻¹ (K⁻¹)
EXAMPLE 1 Li=32wt%
EXAMPLE 2 Li=32wt%
EXAMPLE 3-2 Li=50wt%
EXAMPLE 4 Li=32wt%
EXAMPLE 5 Li=32wt%
EXAMPLE 6-2 Li=50wt%

FIG. 4

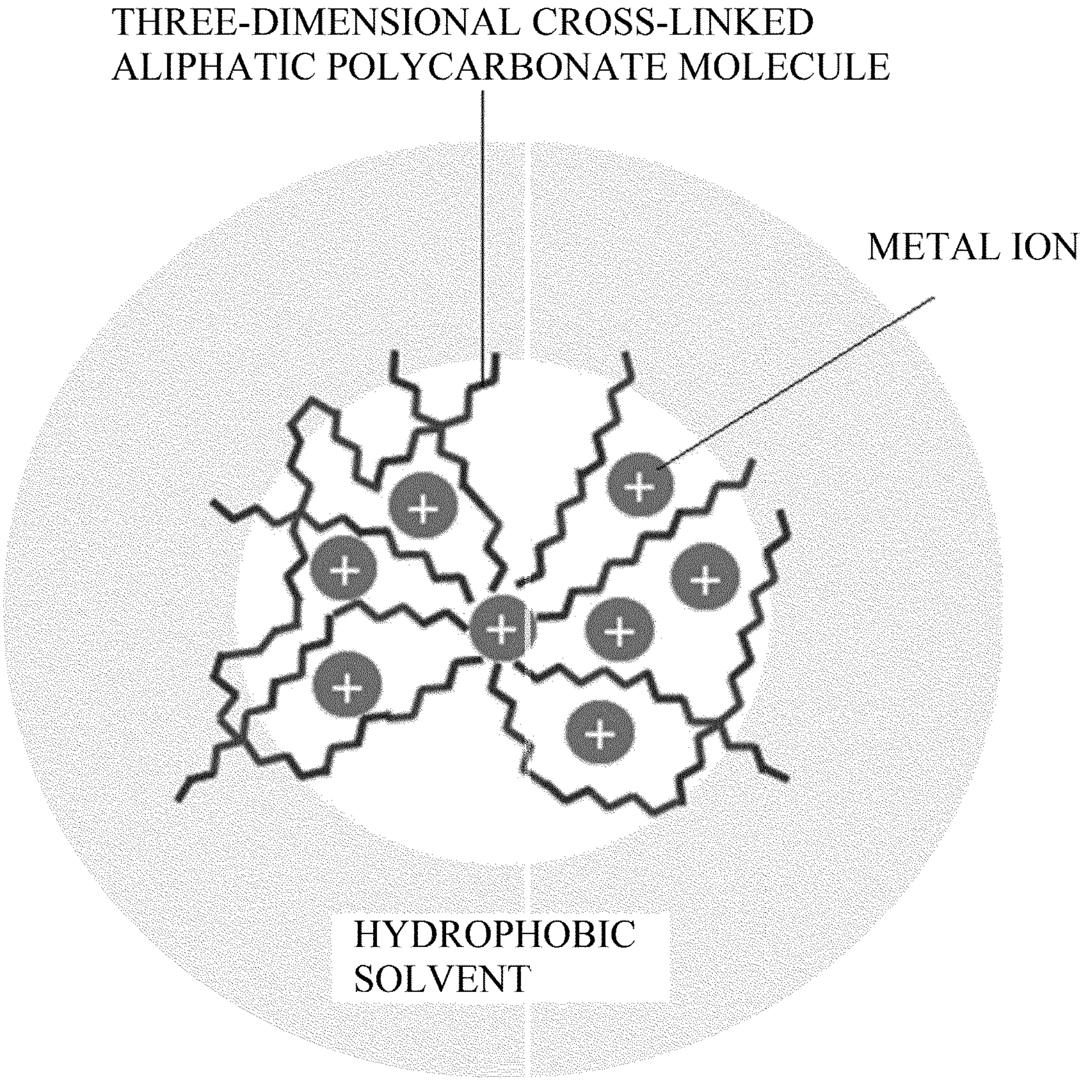
THREE-DIMENSIONAL CROSS-LINKED
ALIPHATIC POLYCARBONATE MOLECULE
METAL ION
HYDROPHOBIC
SOLVENT

FIG. 5

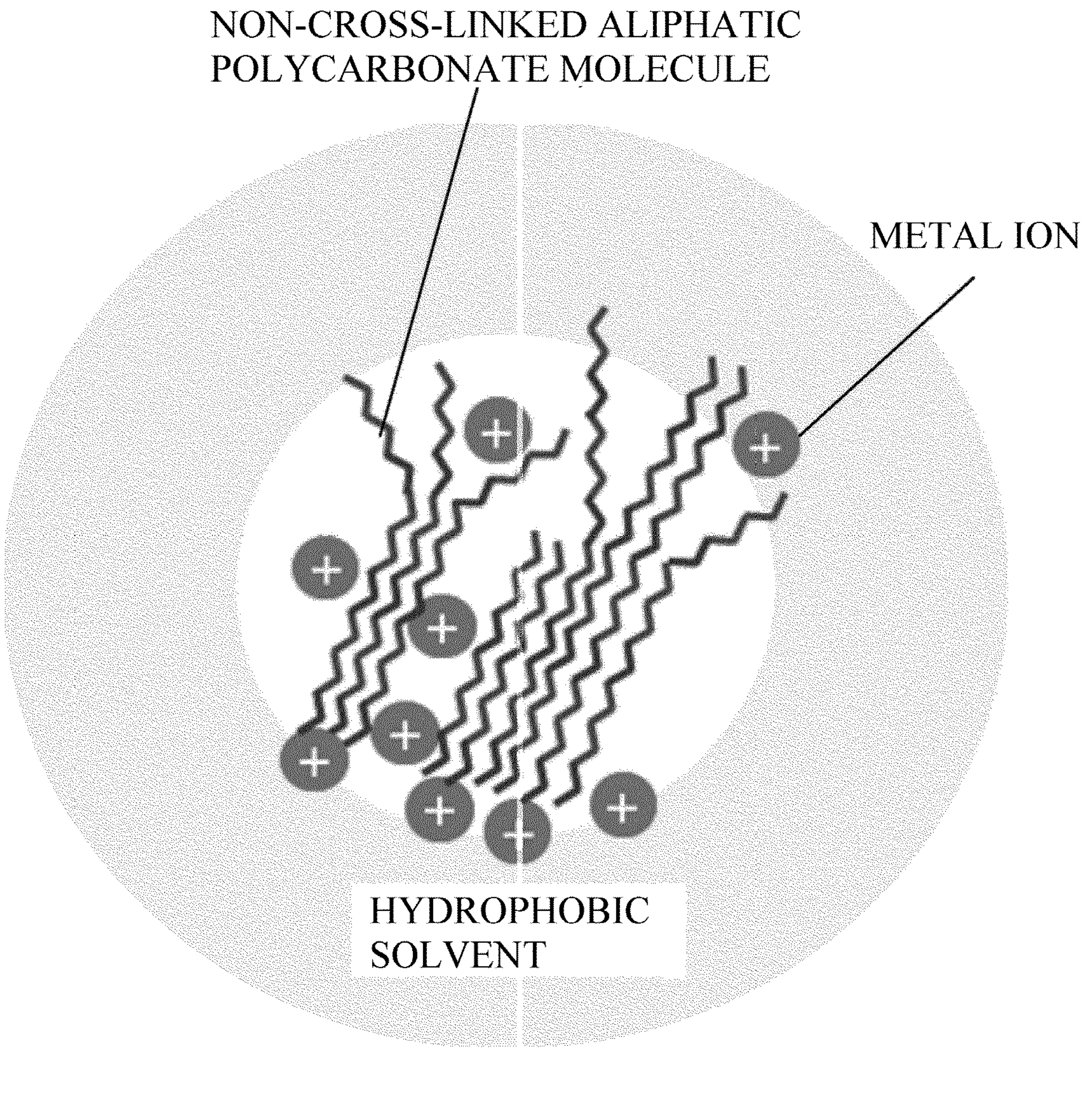
NON-CROSS-LINKED ALIPHATIC POLYCARBONATE MOLECULE
METAL ION
HYDROPHOBIC SOLVENT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014137869 A
- JP 2005044704 A
- JP 2019069158 A
- JP 2019199161 A